# EUROPEAN PATENT SPECIFICATION

(11) **EP 2 231 354 B1**
(45) Date of publication and mention of the grant of the patent: **01.08.2018**
(21) Application number: 09700955.9
(22) Date of filing: 07.01.2009
(51) Int. Cl.: B23B 27/12, B23B 29/03, B23C 5/06, B23C 5/10

(54) **SELF-PROPELLED ROTARY METAL CUTTING INSERT AND COMBINATION OF THAT CUTTING INSERT AND A CARTRIDGE**
SELBSTFAHRENDER DREHENDER SCHNEIDEINSATZ FÜR METALL UND KOMBINATION VON DIESEM SCHNEIDEINSATZ UND EINER MONTAGEPATRONE
PLAQUETTE DE COUPE ROTATIVE AUTOMOTRICE POUR MÉTAL ET COMBINAISON DE CETTE PLAQUETTE DE COUPE ET D'UNE CARTOUCHE DE MONTAGE

(30) Priority: 07.01.2008 US 10279 P
(43) Date of publication of application: 29.09.2010
(73) Proprietor: Rotary Technologies Corporation, Rancho Dominguez, CA 90221 (US)
(72) Inventor: ENDRES, William, J., Houghton, MI 49931 (US); WOODRUFF, Douglas, J., Atlantic Mine, MI 49904 (US); LOOSEMORE, John, W., Hancock, MI 49930 (US); KUMBERA, Thimmaiah, G. Kumbera, Houghton, MI 49931 (US)
(74) Representative: Graham Watt & Co LLP
(86) International application number: PCT/US2009/030360
(87) International publication number: WO 2009/089300

(56) References cited:
- EP-A1- 0 599 393
- EP-B1- 0 176 592
- DE-A1-102004 001 970
- US-A- 2 944 323
- US-A- 3 845 336
- US-A- 4 378 184
- US-A- 4 477 211
- US-A- 4 507 023
- US-A- 4 507 023
- US-A- 4 552 491
- US-A- 4 606 248
- US-A- 6 050 751
- US-A1- 2007 140 803
- US-B2- 6 926 472
- US-B2- 7 156 006

## Description

### FIELD OF INVENTION

This invention pertains to self-propelled rotary cutters useful in machining metals and to a cartridge assembly for rotatably mounting such cutters on a tool body during machining operations during which the cutters are exposed to heat and are subjected to axial and radial loads. More particularly, the invention pertains to compact forms of such cutters and cartridges in which transfer of heat from the cutting edge of the cutter to bearings in the cartridge is reduced and controlled to extend bearing life and to enable cartridge size to be significantly reduced.

### BACKGROUND

U.S. Patents 4,477,211 and 6,073,524 illustrate the state of the art from which the present invention provides advances which enable self-propelled rotary cutter elements (commonly called "inserts") to be used in metal cutting (machining) operations and applications not heretofore possible in important commercial production contexts. A meaningful product context in which self-propelled rotary cutting inserts have found limited commercial use, despite the proven advantages and benefits of them, is in the boring of piston cylinders in modern internal combustion engine blocks. A significant reason for that situation is that the relatively large size of the insert mounting cartridges of the prior art requires the use of tool bodies of such size that the tools are too large for use to bore the smaller cylinder diameters of modern automotive, motorcycle, yard equipment and generator engines.

An advantage of rotary metal-cutting inserts, which move in their holders as they operate to cut metal, over conventional stationary cutter elements, which do not move in their holders as they cut metal, is that rotary inserts have longer useful lives than do stationary cutter elements. That increased useful life is due to the fact that the location on a rotary insert where it engages a workpiece continually changes as cutting occurs because the insert rotates in its holder in response to forces applied to the insert by the workpiece and deformed chips of material removed from the workpiece, and so the insert area of contact with the workpiece and deformed chips does not become as hot as the area of a stationary cutter that engages with a comparable workpiece and deformed chips. However, rotary cutting inserts commonly become quite hot as they function over time in a given machining operation. As shown in Patent 4,477,211, the mounting structures (commonly called "cartridges") for rotary cutting inserts include bearings which are loaded to significant levels as they are subjected to the radial and axial loads applied to the round cutting insert by a workpiece as it is cut by the insert.

Heat is a principal cause of bearing failure. The prior art solution to the problem of bearing heating in a cartridge for a rotary cutting insert has been to use robust and comparatively large thrust-load and radial-load bearings in the cartridges. The need for large bearing assemblies caused the cartridges to be large and to require support for the cartridge shaft (about which the insert is rotatable) at the opposite ends of the shaft. Those aspects of prior art rotary cutters and their mounting cartridges, in turn, required the use of relatively large tool bodies in which the cartridges are securely, yet removably, carried. Large tool bodies are not particularly troublesome and application limiting where rotary cutting inserts are used in turning (lathing) and milling machining of a metal workpiece. In the field of boring, however, the prior art need for tool bodies of comparatively large diameter can meaningfully restrict and limit the situation where rotary cutting inserts can be used to good advantage. That having been said, more compact cartridges are still desirable in milling machining applications since a small cartridge allows more cutting inserts to be mounted to a tool body of given diameter.

It is seen, therefore, that needs exist for improvements in rotary cutting inserts, and in cartridges for rotatably mounting such inserts in ways affording use of smaller adequate radial-load and thrust-load bearings, which enable the inserts and cartridges to be defined more compactly, so that smaller tool bodies and tool bodies that hold more cutting inserts can be made and used. Satisfaction of those needs will make possible increased use of rotary cutting inserts in metal in broader metal machining applications.

From US 4,507,023, on which the preamble of claim 1 is based, it is known to provide a cutting tool having a bit-holder and a throw-away tip.

### SUMMARY OF INVENTION

This invention beneficially addresses the needs identified above. It does so by providing annular rotary cutting inserts which are configured to transfer to a supporting cartridge a meaningfully reduced portion of the thermal energy (heat) acquired by the inserts as they engage and cut a metal workpiece. Also, it does so by defining the cartridge and its bearings in ways which enable the cartridge bearings to receive a reduced portion of the heat transmitted to the cartridge from the insert and which enables the bearings to better rid themselves of heat transmitted to them. Further, it does so by cooperatively arranging the insert and the cartridge to more efficiently transfer machining forces applied to the insert through the cartridge to a tool body carrying the cartridge so the cartridge shaft can be supported at only one end, at any angular orientation about that cartridge shaft, and with no need for different versions of the cartridge for left-hand and right-hand cutting applications. While these improvements can be used to advantage in cartridge and insert sets of conventional size, they enable cartridge and inserts sets to be defined more compactly than heretofore possible for machining loads of given magnitudes, thus enabling meaningful reductions in the size of tool bodies to which a cartridge is mounted.

One way in which the present invention provides these improvements is to define the insert and the manner of its connection to a cartridge so that the connection provides a thermal impedance effect. The thermal impedance effect causes less of the heat in the insert to be transferred to the cartridge, notably to the portions of the cartridge in which the bearings are located, and to cause more of the heat in the insert to be transferred to the environment of the insert. A result is that the cartridge bearings run cooler and with increased useful life.

The present invention provides a self-propelled rotary metal-cutting insert according to claim 1 comprising: a body having a central axial hole extending between opposite ends of the body and by which the body can be mounted onto a rotor for rotation with the rotor about an axis of the body during and in response to cutting engagement of the insert with a workpiece, characterized in that the body has an exterior surface which extends between the body ends and is defined as a surface of revolution concentric to the body axis, the exterior surface defining a circular cutting edge concentric to the body axis, the body having an inner surface defining said axial hole, said inner surface comprising a plurality of circumferentially spaced apart peak surfaces, said peak surfaces defining a plurality of circumferentially spaced apart valleys, each of said plurality of peak surfaces comprising at least a surface portion for contacting an outer surface of said rotor and maintaining a radial separation from said rotor to said valleys, and wherein the body is defined to impede the transfer of heat generated at the cutting edge across the surface of the central hole of the body.

Preferably, substantial portions of the exterior surface of the body exist on opposite sides of the cutting edge.

Conveniently, one end of the body is a base end at which the body defines a flat base surface perpendicular to the body axis, and the base surface defines a recess concentric to the body axis, the recess having an outer limit proximate to but inwardly from the body exterior surface, the recess extending from its outer limit to the central hole of the body. Preferably, the exterior surface of the body extends inwardly from the cutting edge and then upwardly to a top end of the insert.

The present invention also encompasses the combination according to claim 5 of the self-propelled annular rotary metal cutting insert according to claim 1 with a cartridge which is mountable to a tool body and which supports the cutting insert for rotation concentrically about a cartridge axis.

Preferably, each surface portion of each said plurality of peak surfaces defines a section of a circle along said circumferential direction, said circle being concentric with the circular edge.

Conveniently, the rotor comprises a rotor sleeve, wherein said body is rotationally fixed relative said rotor sleeve of said rotor.

Preferably, one of said opposite ends comprises an annular recess coaxial with the hole and extending to said inner surface.

Conveniently, the insert further comprises a riser extending from the body in a direction toward a cap.

### DESCRIPTION OF THE DRAWINGS

The accompanying drawings depict presently preferred structural arrangements which implement the present invention to provide the benefits summarized above and also other benefits, including positive-rake cutting and flow-control and breaking of continuous chips. The depicted arrangements are not the only forms in which the invention usefully can be embodied. In the drawings, like or closely similar structural or functional features are identified by like reference numbers. The several figures provided by those drawings are as follows:
Fig. 1 is an exploded perspective view, shown generally from the top, of an improved rotary cutting insert and an improved insert mounting cartridge shown in association with the front end of a turning tool body which is structured to receive and securely hold the lower end of the cartridge;
Fig. 2 is an exploded perspective view, shown generally from the bottom, of the insert, cartridge, and turning tool body front end shown in Fig. 1;
Fig. 3 is a perspective view of a primarily-flat mounting shim, two of which are located in the tool body front end shown in Fig. 1;
Fig. 4 is an elevation view, partly in cross-section, showing the base of the cartridge stator and adjacent turning tool body shown in Fig. 1 and 2;
Fig. 5 is a cross-section view taken substantially along Line 5 - 5 in Fig. 4 through the base of the cartridge stator and the mounting shims and clamp screw, showing the cartridge and insert secured to the tool body, all consistent with Figs. 1 and 2;
Fig. 6 is in three views, namely, Fig 6a which is a top plan view of an improved rotary cutting insert, Fig. 6b which is a top perspective view of that insert, and Fig. 6c which is a bottom perspective view of that insert;
Fig. 7 is a side elevation view of the insert shown in Figs. 6a-6c;
Fig. 8 is a top plan view of an insert with a heat shield not part of the present invention;
Fig. 9 is in two views, namely, Fig. 9a which is an exploded view of the cartridge of Fig. 1, shown generally from the top, and Fig. 9b which is an exploded view of that cartridge, shown generally from the bottom; the insert and the cartridge hold-down cap for the rotary cutting insert are not shown in Figs. 9a and 9b;
Fig. 10 is a cross-sectional elevation view, taken in an axial diametrical plane, of the cartridge shown in Figs. 1, 2, 4, 9a and 9b, without depiction of the rotary cutting insert or of its hold-down cap;
Fig. 11 is a cross-sectional elevation view of the rotor of the cartridge shown in Fig. 10;
Fig. 12 is a cross-section view of the stator, and of other components fixed to it, for the cartridge shown in Fig. 10;
Fig. 13 is a perspective view of a boring tool defined to receive three cartridges, such as shown in Fig. 10, where one of the mounting shims for each cartridge is replaced with a slightly tapered, primarily-flat, adjustment shim that provides adjustability of the cartridge position in the radial direction of the tool body;
Fig. 14 is a perspective view of a milling tool defined to receive plural cartridges, such as shown in Fig. 10, where one of the mounting shims is replaced with a slightly tapered, primarily-flat, adjustment shim that provides adjustability of the cartridge position in the axial direction of the tool body;
Fig. 15 is a perspective view which illustrates the use of two non-adjustable oblong-shaped mounting shims in a boring tool;
Fig. 16 is a fragmentary perspective view which illustrates the use of two non-adjustable oblong-shaped mounting shims in a milling tool;
Fig. 17 is a close-up view of a non-adjustable cartridge mounting arrangement for turning tools using two round-shaped mounting shims;
Fig. 18 pertains to a mounting shim of oblong shape and is in three views, namely,
Fig. 18a which is a top view, Fig 18b which is a side elevation view, and Fig. 18c which is a perspective view;
Fig. 19 pertains to a mounting shim of substantially round shape and is in three views, namely, Fig 19a which is a top view, Fig 19b which is a side elevation view, and Fig. 19c which is a perspective view;
Fig. 20 is a cross-sectional elevation view which shows an embodiment of an insert with additional chip formation space and ground-in positive rake angle;
Fig. 21 shows an insert of this invention in which the face of the insert at and adjacent the insert's cutting edge defines recesses and ridges;
Fig. 22 is an axial diametrical plane cross-sectional elevation view of an insert providing heat transfer impedance and having two useable cutting edges;
Fig. 23 is a perspective view of a heat shield sleeve not part of the invention which is matable within the inner diameter of an insert and which is externally configured to provide thermal impedance effects;
Fig. 24 is a top plan view of an arrangement not part of this invention which is configured to provide thermal impedance effects is a direction radially of the insert;
Fig. 25 is an enlarged cross-sectional elevation view taken along line 25-25 in Fig. 24;
Fig. 26 is a perspective view, generally from the top, of a cartridge of this invention which incorporates a cuttings chip breaker;
Fig. 27 is a perspective view, generally from the bottom, of the cartridge and chip breaker shown in Fig. 26;
Fig. 28 is a perspective view, generally from the top, of a cartridge of this invention having another form of chip breaker mounted to it;
Fig. 29 is a perspective view, generally from the bottom, of the cartridge and chip breaker shown in Fig. 28; and
Fig. 30 is a perspective view showing the use of a chip deflector with an insert and cartridge assembly mounted to a turning tool body.

### DESCRIPTION OF THE DEPICTED STRUCTURES

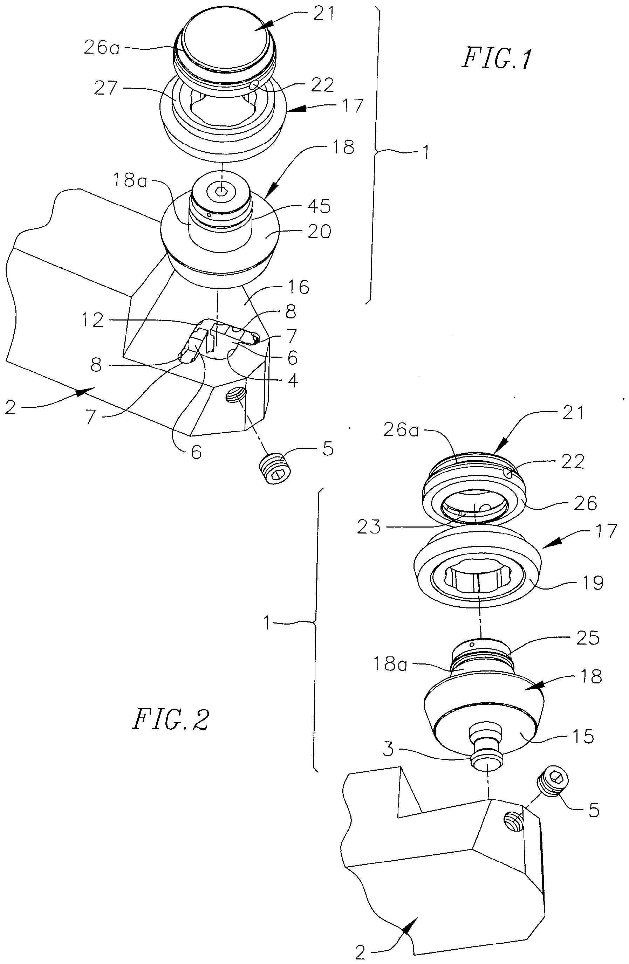

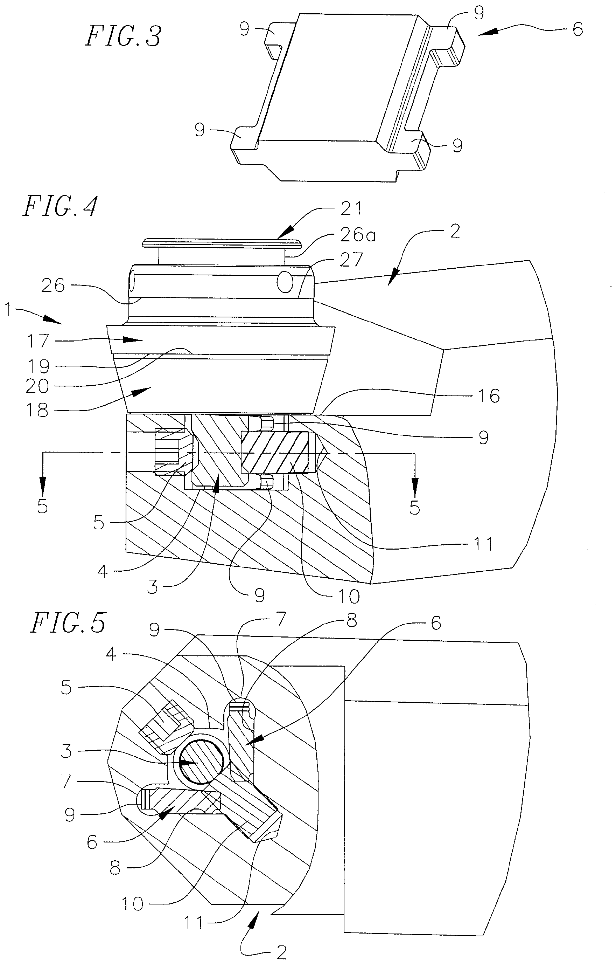

Referring to Figs. 1 and 2, which illustrate a lathe tool application of this invention, a rotary tool system of this invention comprises a preferably axisymmetric cartridge 1 attached to the front end of a lathe tool body 2 by placing the cartridge stator base 3 (viewable in Fig. 2) into a mounting pocket 4 (Fig. 1) in tool body 2 and by clamping the stator base 3 in the tool body via tightening of a clamp screw 5. Except as shown and described, the structure of the tool body 2 may be of conventional nature toward and at its rear end (not shown). The stator base 3 is clamped in the tool body (see Figs. 4 and 5) between the end of clamp screw 5 and two hardened mounting shims 6 (Fig. 3) that are placed into shim slots 7; the shim slots are extensions of the mounting pocket 4, as shown best in Fig. 1. As shown in Figs. 1 and 3, the mounting shims 6 preferably have chamfers on their corners to allow an approximate fit into the rounded ends of shim slots 7 while assuring that each mounting shim 6 makes continuous flat surface contact with its shim support surface 8, which is defined by a wall of the pertinent shim slot. Furthermore, the mounting shims 6 preferably have ears 9 that, as seen in Figs. 4 and 5, fit around a shim retainer 10 which preferably is made of a flexible material such as rubber and is inserted into a shim retainer hole 11 located in the back corner 12 of mounting pocket 4; the shim retainer 10 fits between the ears 9 on the ends of the mounting shims 6 that are located in the back corner 12 of the mounting pocket.

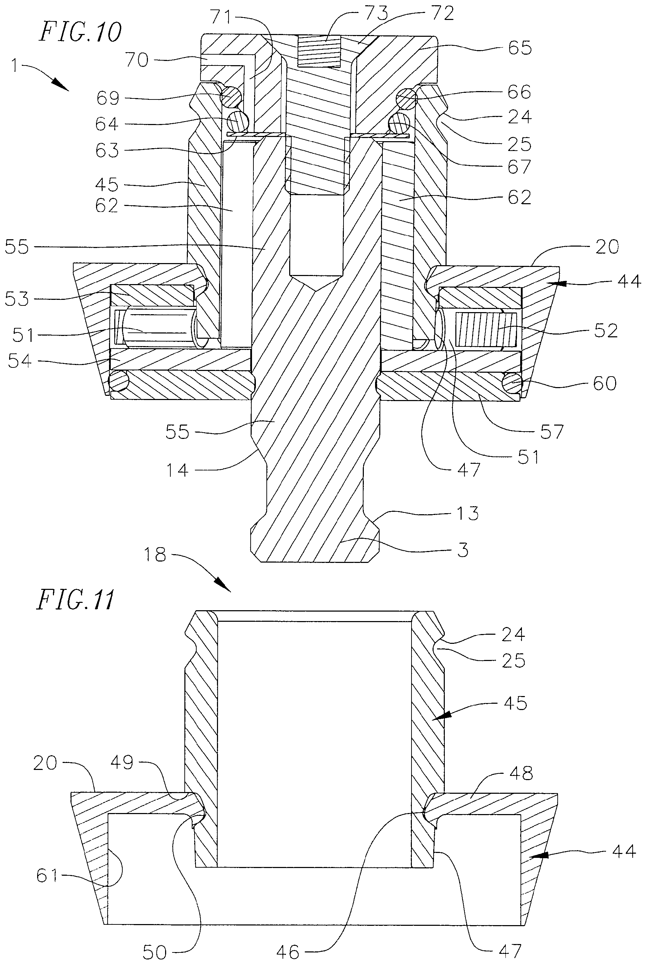

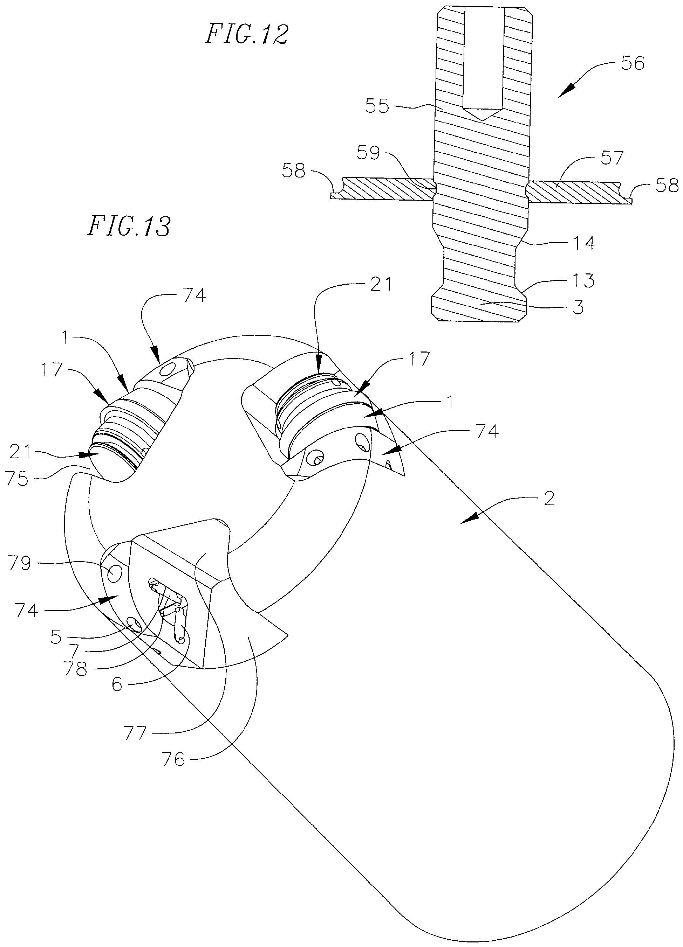

As shown in Figs. 2 and 4, e.g., stator base 3 is in the form of a stub shaft which extends coaxially from the lower end of cartridge stator 55 (Figs. 10 and 12). The stator base, intermediate its ends, is of reduced diameter between an upwardly facing conical lower clamp taper 13 and a downwardly facing conical upper clamp taper 14. Fig. 4 illustrates how, upon tightening clamp screw 5, the tip of the screw preferably initially makes contact with the lower clamp taper 13, and subsequently with the upper clamp taper 14. Initial contact of the clamp screw 5 with the lower clamp taper 13 invokes a wedging action that provides high mechanical advantage in drawing the cartridge bottom 15 (viewable in Fig. 2) tight upon the tool body seating surface 16 (see Fig. 1) in which the cartridge mounting pocket is defined. The subsequent contact of the clamp screw 5 with the upper clamp taper 14 provides additional support near the top of the stator base 3 affording additional bending support to the as-mounted stator base 3. As seen in Fig. 5, contact of the stator base 3 with the clamp screw 5 and the two mounting shims 6 provides three points of contact producing full translational constraint of the cartridge in the plane of the of tool body seating surface 16 (see Fig. 4, bottom). The hole in tool body 2 into which clamp screw 5 is threaded is oriented so that its axis is directed toward the back corner 12 of cartridge mounting pocket 4 in the tool body, as shown best in Figs. 1 and 5.

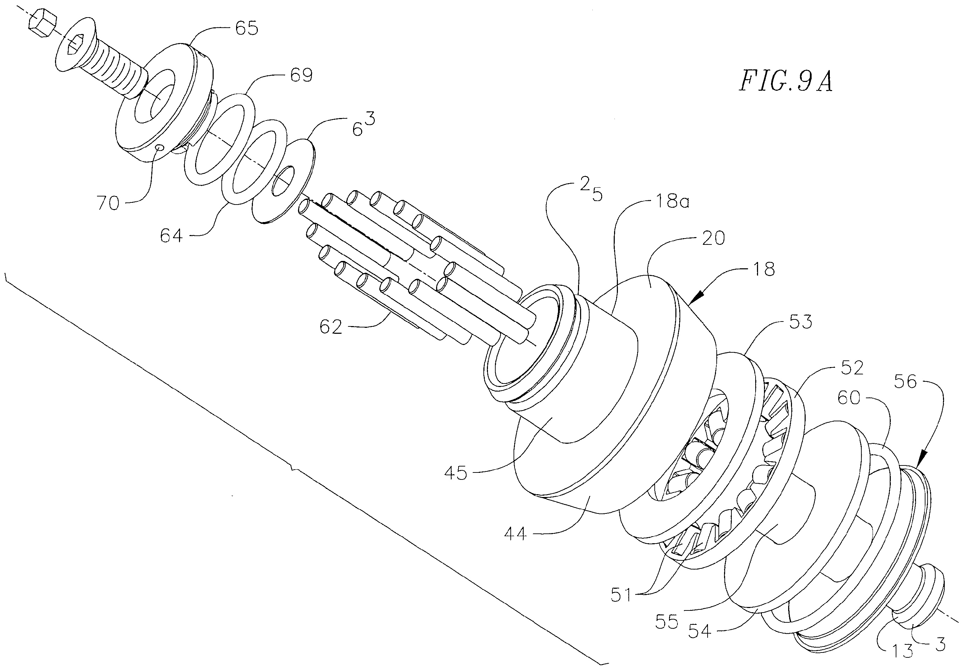

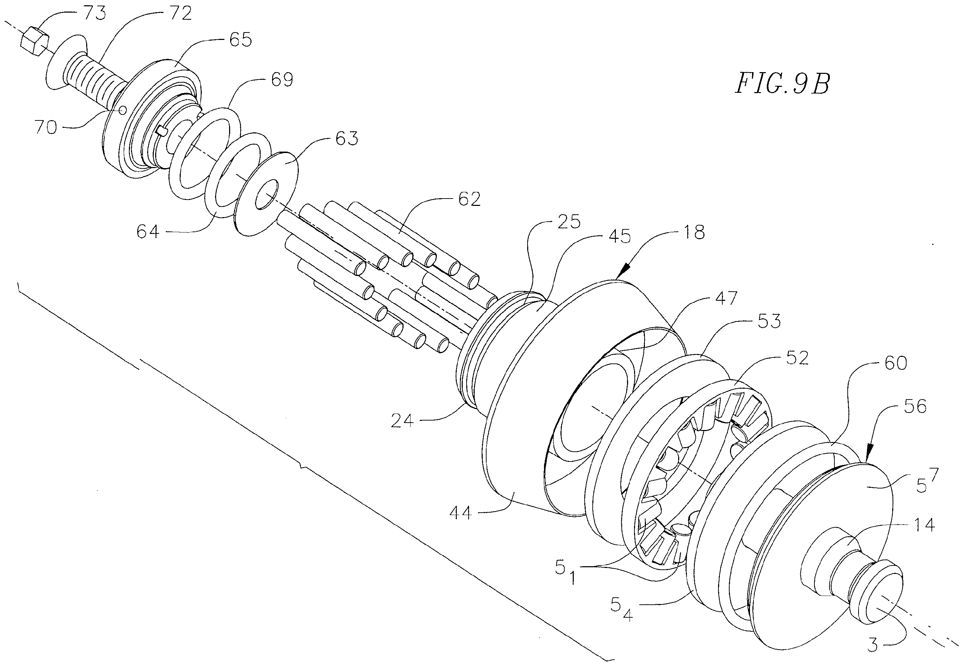

Figs. 1 and 2 also illustrate how a self-propelled rotary cutting insert 17 can be axially slid onto the outer diameter 18a of the sleeve 45 of cartridge rotor 18, to be concentric to the central axis of the cartridge, until the insert bottom 19 contacts an insert support platform provided by a rotor seating surface 20 at the top of a skirt of the rotor; see also Figs. 9a and 9b. The cutting insert 17 is then held in place in cartridge 1 by hold-down cap 21, which is axially snapped onto the assembly of the cartridge and the insert as the hold-down cap retaining ring 23 expands over the rotor ring-groove top 24 to settle into the ring-groove 25 in rotor sleeve 45 (see also Fig. 11). The hold-down cap retaining ring is a resilient element of circular nature with an expansion discontinuity in it, and it is carried in a groove formed in the wall of a circular recess in the bottom of cap 21; that recess is centered on the axis of symmetry of the circular cap. Upon tightening of the hold-down cap screws 22, the retaining ring wedges against the groove-side of the ring-groove top 24 of the cartridge rotor sleeve 45. This wedging action compresses the hold-down cap bottom 26 against insert top 27 and subsequently insert bottom 19 against seating surface 20 of cartridge rotor 18 with force sufficient to prevent rotation of cutting insert 17 relative rotor sleeve 45 which extends upwardly from rotor seating surface 20 formed by rotor skirt 44 (see Figs. 9a, 9b, 10 and 11). Loosening of hold-down cap screws 22 allows the hold-down cap 21 to be removed by prying upward on the hold-down cap removal groove 26a.

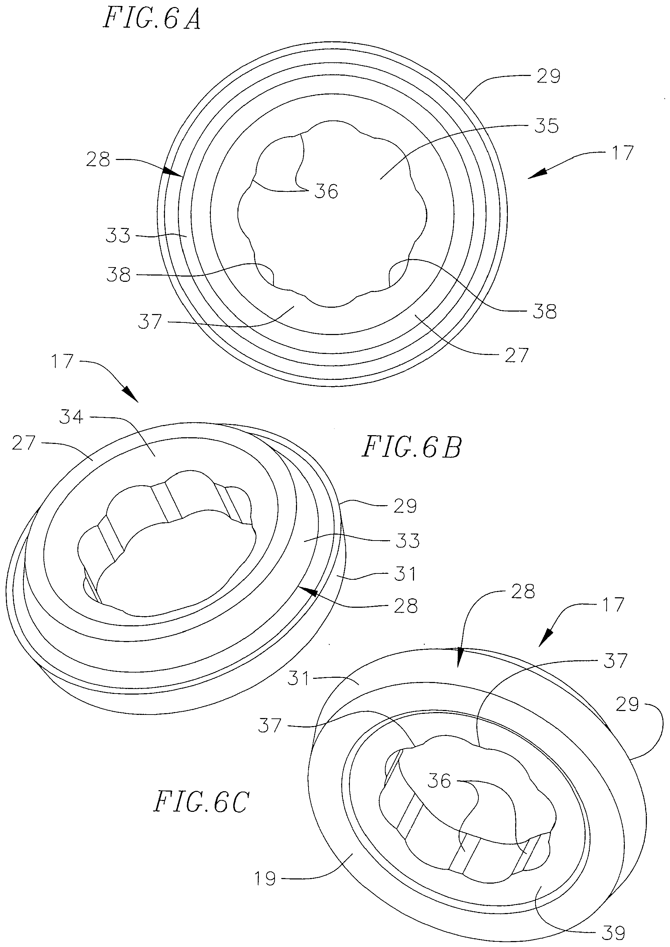

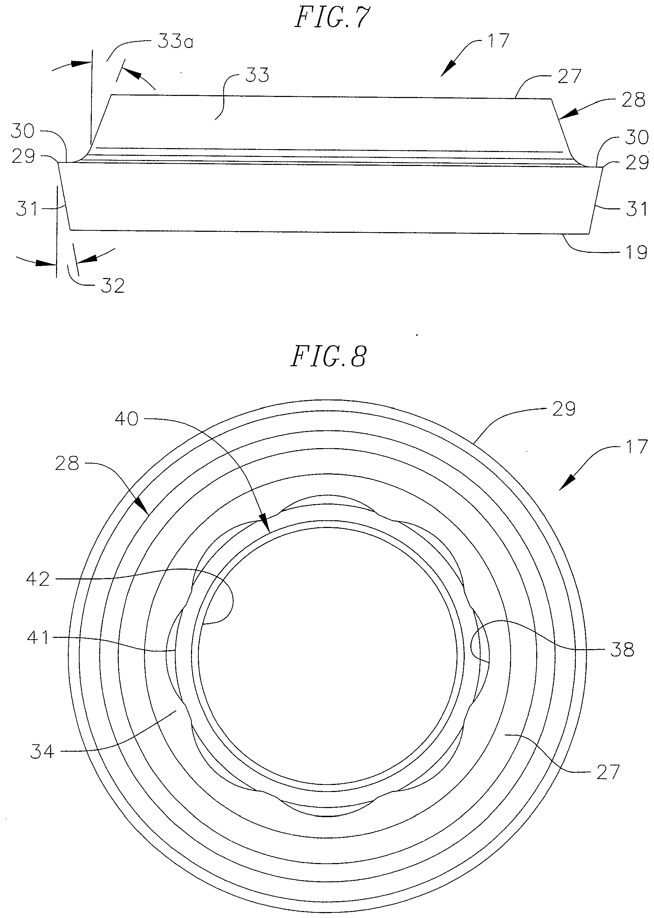

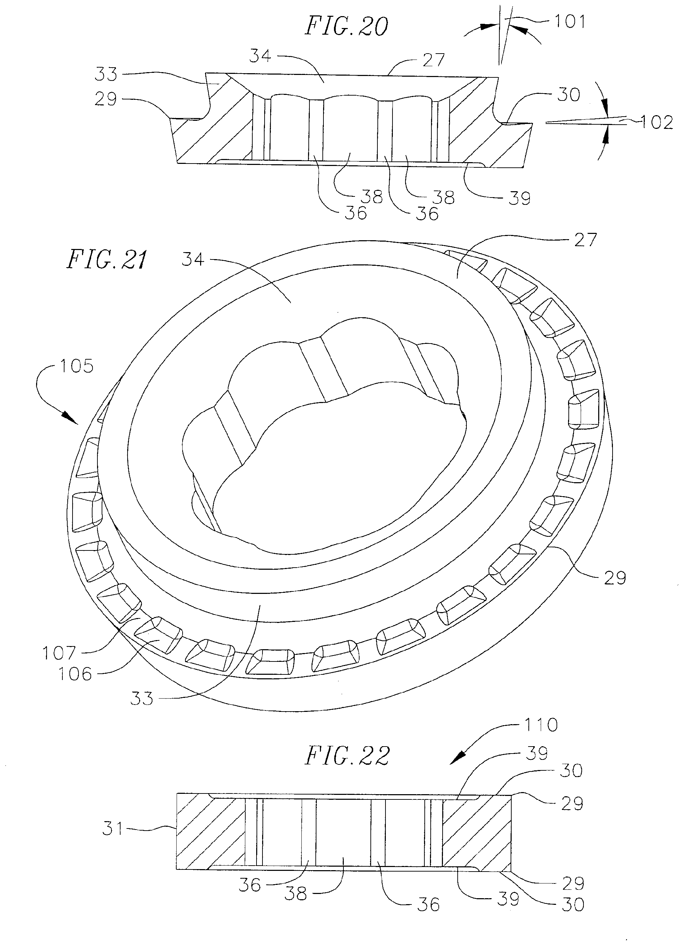

Figs. 6a-c and 7 show a cutting insert 17. Insert 17, in common with other inserts of this invention, is an annular article of manufacture having preferably flat and preferably parallel top and bottom end surfaces which are normal to a central axis of the insert. The exterior surface of the riser between its ends is defined basically as a surface of revolution concentric to the insert's central axis in which local features, such as recesses and/or ridges, may be present. Insert 17 is comprised of an annular insert body 28 having a circumferential cutting edge 29 at the intersection of a rake face 30 (upwardly facing) and a flank face 31 (laterally facing) around the insert's circumference. The flank face 31 may have a non-zero relief angle 32, as shown in Fig. 7, for use in positive rake configurations; the relief angle 32 may be zero when the insert is used in negative rake configurations. As compared to prior commercially used inserts which have flat parallel top and bottom surfaces, insert 17 includes a top riser 33, having a riser angle 33a, near its inner diameter. The insert riser serves several purposes, including a lowering of the cutting edge 29 relative to the axial full thickness of the insert body between its top 27 and bottom 19 surfaces, and to deflect cuttings chips to avoid significant chip contact with hold-down cap 21 and potential wedging of cutting chips between the hold-down cap bottom 26 and the insert top 27. A value of about 20° for angle 33a works well when the insert is used to cut materials, such as gray cast iron and compacted graphite iron, which form discontinuous cutting chips. A value near to or equal to 0° is preferred for use with materials such as titanium alloys, nickel alloys, carbon/alloy steels, and stainless steel which form continuous chips. In other usages, the value of the riser face angle can be negative (see angle 101 in Fig. 20), on the order of -10°, to control the chip to form a tighter curl which assists better evacuating chips from the cutting region and to break chips into more manageably sized pieces. Lowering the cutting edge 29 relative to the full insert thickness (height) facilitates achieving positive rake cutting, in particular while meeting clearance requirements on smaller diameter tool bodies used in boring processes, all while retaining greater overall thickness and resulting strength of the cutting insert 17. Preferred materials for defining the insert body are tungsten carbide, titanium carbide, silicon nitride, and ferrous alloys, among other materials known to be useful in metal cutting processes; such materials are quite hard and, with the exception of ceramic materials, have high thermal conductivity and so readily conduct heat in inserts made of them to other things with which they are in contact.

Continuing with Figs. 6a-c, the insert top 27 meets with an upwardly concave inner hold-down cap clearance chamfer 34 which is sized and oriented to provide clearance for the hold-down cap 21. The insert top 27 preferably is flat to provide good thermal contact with hold-down cap bottom 26 so that hold-down cap 21 serves as a heat sink for improved convection and radiation of heat energy present in the insert to the environment in preference to conduction into the cartridge 1, which contains rolling element bearings which, as noted, are best protected from high temperatures. To further create preferential flow of heat energy to the environment rather than to cartridge 1 from a hot insert, the inner diameter 35 of the insert can be scalloped so that only the tops 36 of scallop peaks 37 make contact with rotor sleeve 45 (see Fig. 10) when the insert is mounted to the cartridge. Scallop tops 36 are precision machined or ground to a circularly cylindrical surface concentric with the insert's cutting edge 29 and to mate in a snug sliding fit with the outer diameter 18a of rotor 18. The air present in the scallop valleys 38 serves as thermal insulation so that the heat conduction path through the scallop tops 36 to the rotor is much less than if the insert inner diameter 35 were continuously cylindrical with constant diameter. Furthermore, cutting insert 17 preferably has a bottom recess 39 (Fig. 6c) formed, cut or ground into the insert body 28 to provide an air gap producing reduced contact with and reduced thermal conductance to rotor seating surface 20 of cartridge 1.

As illustrated in Fig. 8, the insert body 28 may have inserted into its inner diameter 35 a heat shield 40 not part of the invention made as a continuous ring of material having lower thermal conductivity than that of the insert body 28 to provide additional resistance to thermal conduction from the insert to cartridge 1. While heat shield material is preferably a metal such as stainless steel, this invention also contemplates the use of a ceramic material to define the heat shield. The heat shield 40 typically has ends that are chamfered on their outer diameter to promote centering during pressing, e.g., of the heat shield 40 into connection with insert body 28 during which the hard scallop peaks 37, no longer needing special machining for precision fit with the rotor outer diameter 18, can cut onto the heat shield outer diameter 41. The insert, with the heat shield in place, then can be precision machined or ground to form the heat shield inner diameter 42 concentric with cutting edge 29 and to snugly mate with the outer diameter 18a of rotor 18.

In implementations of this arrangement in which a composite insert is used, i.e., an insert having a hard relatively highly heat conductive annular outer portion defining the cutting edge and an inner relatively poorly heat conductive annular heat shield portion of a material different from that of the outer portion, the inner and outer portions of the insert may or may not contact each other continuously along the surfaces where they mate. The composite insert shown in Fig. 8 has discontinuous contact between the outer hard portion and the inner poorly conductive portions. The greater the ratio of the inner diameter area of the insert to the portion of that area which physically contacts the heat shield (or the rotor sleeve if there is no heat shield present), the greater is the thermal impedance of the connection of the insert to the heat shield (or to the rotor). High thermal impedance at that connection is desired.

Figs. 9a, 9b and 10 illustrate cartridge 1 and its internal components in three-dimensional exploded views and in a cross-section view, respectively; insert 17 and hold-down cap 21 are not shown in these Figs. Rotor 18, shown in Fig. 115 preferably is created as a permanent assembly of a skirt 44 to a sleeve 45 by partially sliding and self-centering the skirt's minor inner diameter 46 onto the sleeve bottom taper 47 and then, under the force of a pressing die, pushing the skirt top 48 (which defines the rotor seating surface 20) down to the sleeve shoulder 49 and subsequently deforming a "lump" of extra material near the skirt minor inner diameter 46 into the sleeve press groove 50. The two-piece design of rotor 18 allows the sleeve 45 to be precision machined or ground of a material (such as tool steel) suitable as a bearing surface while the skirt 44 may be made of a material and/or with precision not necessarily preferred for a bearing surface. Rotor skirt 44 preferably is defined by a material which has lower thermal conductivity than tool steel, such as stainless steel as one example. Thus, the preferably scalloped insert inner diameter 35, either with or without a heat shield 40, provides thermal resistance in the cartridge's radial direction while the insert bottom recess 39 and the choice of material for the rotor skirt 44 analogously provide thermal resistance in the cartridge's axial direction toward the bottom (mounting) end of the cartridge. The outer extent of insert recess 39 is located close to the outer bottom edge of the insert, and so the contact area between the insert and skirt 44 is an annular area at the outer extent of the skirt at the top of skirt wall 61. Such heat energy as is conducted to the skirt from the insert is transferred predominantly to the skirt wall from which that heat can be dissipated to the environment of the cartridge by radiation and by convection as the rotor turns during periods of use of the insert.

The axial load on the cartridge preferably is supported by thrust rollers 51 that are separated angularly relative to one another by a thrust roller cage 52 and are located at their outer radial ends by the cage and at their inner radial ends by the rotor sleeve bottom taper 47 within skirt 44. The thrust rollers 51 ride between a top thrust washer 53, the inner diameter of which has a slip fit over the circumference of the sleeve bottom taper 47, and a bottom thrust washer 54, the inner diameter of which preferably has a slip fit around the outer diameter of stator shaft 55 of the stator assembly 56 shown in Fig. 12. The thrust washers preferably are made of a material, such as alloy steel, suitable to define a bearing surface.

The stator assembly 56, which is shown in Fig. 12, includes a cylindrical axial stator shaft 55 which is precision machined or ground and composed of a material, such as alloy steel, suitable as a bearing surface. The stator assembly also includes a bottom washer-like retaining disc 57, having a bottom seal retaining lip 58. Disc 57 preferably is permanently attached to the stator 55 by pressing material from the disc into the stator press groove 59. The stator base 3 is the portion of the stator which lies below disc 57. It is the bottom surface of disc 57 which bears against tool body seating surface 16, e.g., when the cartridge is securely mounted to the body of a suitable turning, milling or boring tool. A cartridge bottom seal 60, such as an O-ring, made of material that is pliable and resistant to bearing lubricant and the elements to which the cutting process is exposed, preferably is located between the outer circumference of bottom retaining disc 57 and the inner diameter of skirt wall 61 in a slight interference fit, such that the bottom seal retaining lip 58 limits exposure of the bottom seal to the environment outside cartridge 1. Stator assembly 56 is inserted into the rotor housing 43 (i.e., the rotor sleeve 45) so that the bottom retaining disc 57 of the stator assembly mates with the bottom thrust washer 54 preferably earlier installed into the rotor skirt.

The radial load on the cartridge is supported by a full-complement configuration of radial bearing rollers 62 that are located to fill the elongate annular gap between the stator 55 and the inner diameter of the rotor sleeve 45. Rollers 62 preferably extend within that gap to the top surface of the bottom thrust washer 54; disposition of the lower ends of the radial bearing rollers 62 below thrust rollers 51 reduces the overall height of cartridge 1, as compared to the conventional serial arrangement of bearings shown in Patent 4,477,212. The radial bearing rollers 62 are located axially at their other (upper) ends by a greasing check valve support washer 63 clamped to the top of stator 55 by the cartridge's top retainer 65 which forms a part of a closure of the cartridge. The greasing check valve support washer 63 preferably has an outer diameter slightly larger than the mean diameter of a greasing check valve seal 64, such as an O-ring, which is made of material that is pliable and resistant to bearing lubricant and the elements to which the cutting process is exposed. The cartridge's top retainer 65 defines a seal support surface 66 having an outer diameter such that the top seal 69 experiences a slight interference fit between that seal support surface and the inner diameter of the rotor sleeve 45. The top retainer 65 also defines a greasing check valve seal support surface 67 around which the greasing check valve seal 64 fits tightly with a slight expansion. The top retainer 65 preferably provides a plurality of grease access entry holes 70 extending radially inward from the circumference of top retainer 65. Each hole 70 then connects to a grease transmission hole 71 that extends substantially parallel to the axis of the retainer from the grease access entry hole 70 to the grease check valve seal support surface 67. The pressure of grease injected into the cartridge via the passage formed by holes 70 and 71 expands radially outward the resiliently expandable grease check valve seal 64 allowing grease to enter the cartridge. Grease check valve seal 64 normally seats tightly against the grease check valve seal support surface 67 preventing grease from flowing back out of the cartridge 1. The top retainer 65 is held in place on the stator by top screw 72 which is threaded into the top of stator 55, preferably along with a suitable amount of a thread locking compound. Preferably, the tightening socket in the head of top screw 72 is then filled with a hardenable filler material 73, after which any extra outwardly protruding filler material and non-flush exposed portion of the screw head are machined flush with the nominal top surface of the top retainer 65 to discourage tampering with the top screw. Cartridge 1 preferably is defined as an article of manufacture which is not openable by a user of the cartridge, and into which a user can inject fresh grease when needed.

Fig. 4 includes a side elevation view of the assembled insert and cartridge combination or assembly. It will be noted that the maximum diameter of that assembly coincides with the insert cutting edge (not numbered in Fig. 4 but see Fig. 7, e.g.), and that below that maximum diameter the exterior surface of the assembly has the contour of a right circular frustoconical surface the diameter of which decreases proceeding downward from the upper end of that surface. It also will be noted from Fig. 4 that the plane of the insert cutting edge has a position in that assembly which is close to midway between the top of assembly and the location vertically in the assembly where the cartridge stator engages tool mounting surface 16. The inverted frustoconical configuration of the combination of the exterior surface of the insert below its cutting edge and the lower extent of rotor skirt 44 (see Fig. 11) makes it possible for the cartridge-insert assembly to be mounted to a tool body in such a way that the insert rake face 30 has positive rake with respect to a workpiece. The ability of a cartridge insert assembly of this invention to be used in positive rake machining applications, such as end milling operations, is significant and cannot be achieved with cartridge-insert assemblies using cartridges of the kind depicted in U.S. Patent 4, 477,211.

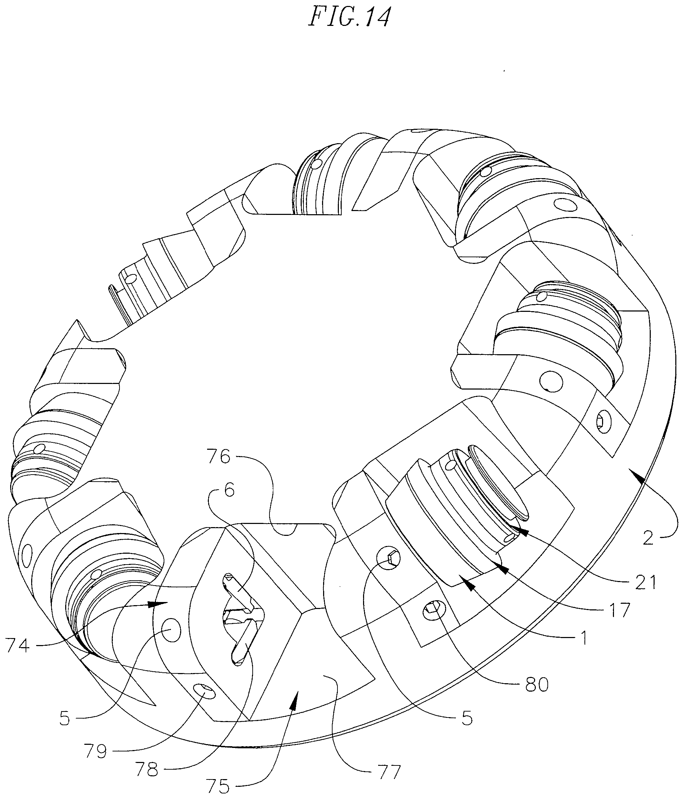

Figs. 13 and 14, respectively, illustrate cylinder boring and face milling tools capable of carrying plural cartridges and inserts according to this invention. In Figs. 13 and 14, one cartridge has been removed to expose its mounting region on the tool body. The mounting features for the cartridge are first machined into a mounting plate 74 that is then affixed in a cartridge pocket 75 which is machined into the tool body 2 to yield the radial and axial rake angles required for inducing desired insert rotation via the side rake angle (axial in boring; radial in face milling) and to provide positive or negative back rake angle (radial in boring; axial in face milling), i.e., the rake angle that primarily regulates chip strain during chip formation as the rotary cutting inserts act to cut a workpiece. The mounting plate 74 is located by the pocket axial (i.e., axially facing) wall 76 and the pocket radial (i.e., radically facing) wall 77 and may be affixed to the tool body with welds and/or adhesives.

The mounting plate 74 for boring and milling tools has all the same mounting-related features as described above in regard to the turning implementation of the invention as shown in Figs. 1, 2 and 4 with the following preferred three differences. First, one of the two mounting shims (leaving one mounting shim 6) is replaced by an adjustment shim 78. The one mounting shim which is replaced is the one that locates the cartridge in the depth-of-cut direction, i.e., the radial direction for boring and the axial direction for face milling, the purpose being to allow tooth-to-tooth alignment, in the field, so all inserts are cutting at the same depth to produce a good surface finish, or at a prescribed stagger in some boring applications as described in Patent 6,135,680. An adjustment shim 78 is identical to a mounting shim 6 with the exception that the adjustment shim surface which the stator base 3 contacts has a slight taper so that as the adjustment shim 78 moves inward and outward in its shim slot 7, the position of cartridge 1 in the depth-of-cut direction changes in ratio to the pitch of the taper. As the second difference, a shim adjustment hole 79 is added in the mounting plate, into which a shim adjustment screw 80 is threaded to enable movement of the adjustment shim 78. The third difference is that the shim retainer hole 11 in mounting plate 74 which receives the shim retainer 10 is oriented along the direction of the shim slot 7 corresponding to the adjustment shim 78. The shim retainer 10 serves as a spring that urges the adjustment shim 78 against its adjustment screw. The shim retainer may be a standard helical spring or it may be of solid elastomeric material having altered/tapered end geometry to facilitate assembly of the single mounting shim 6 and the single adjustment shim 78 into their respective shim slots.

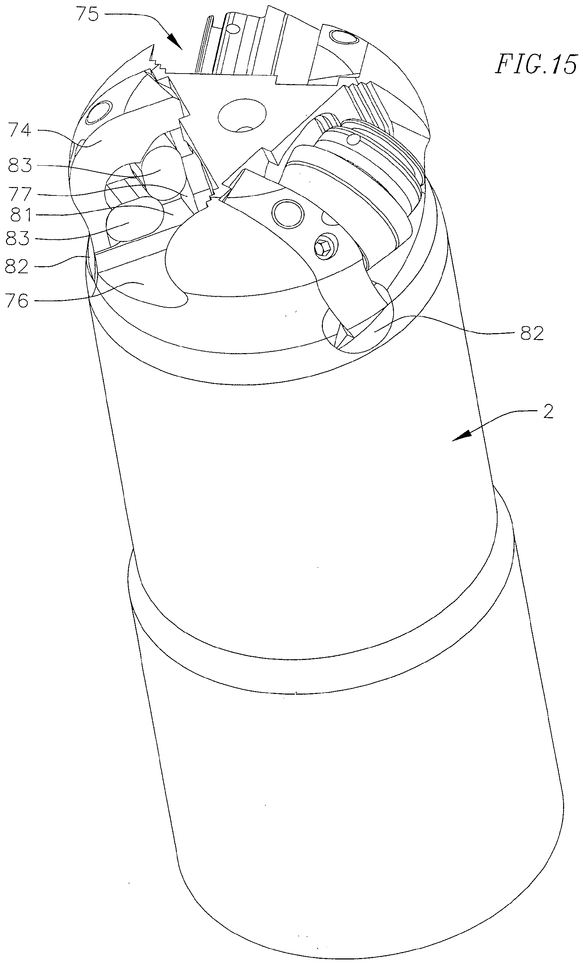

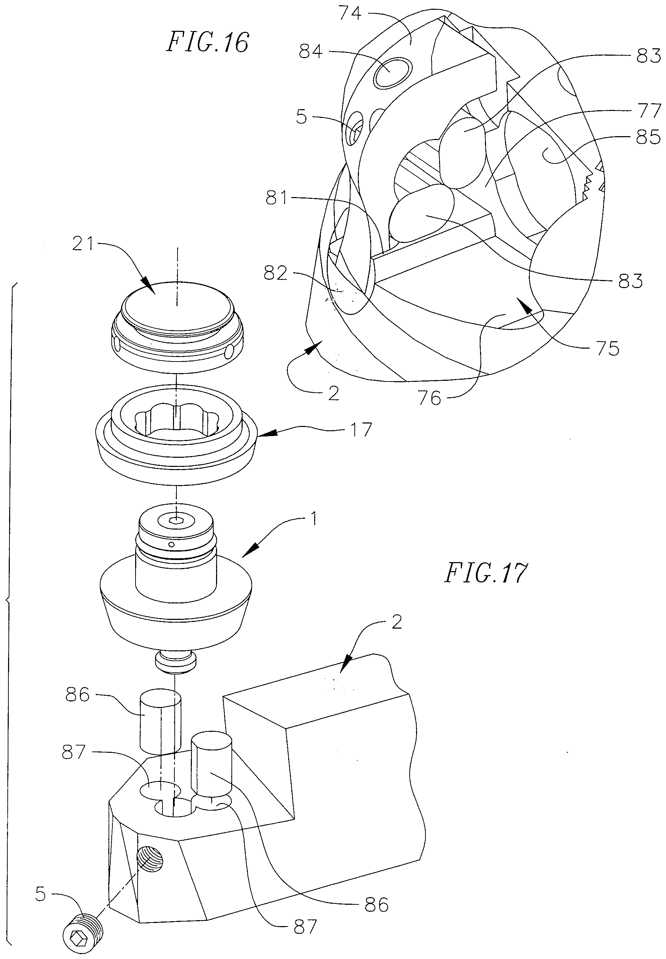

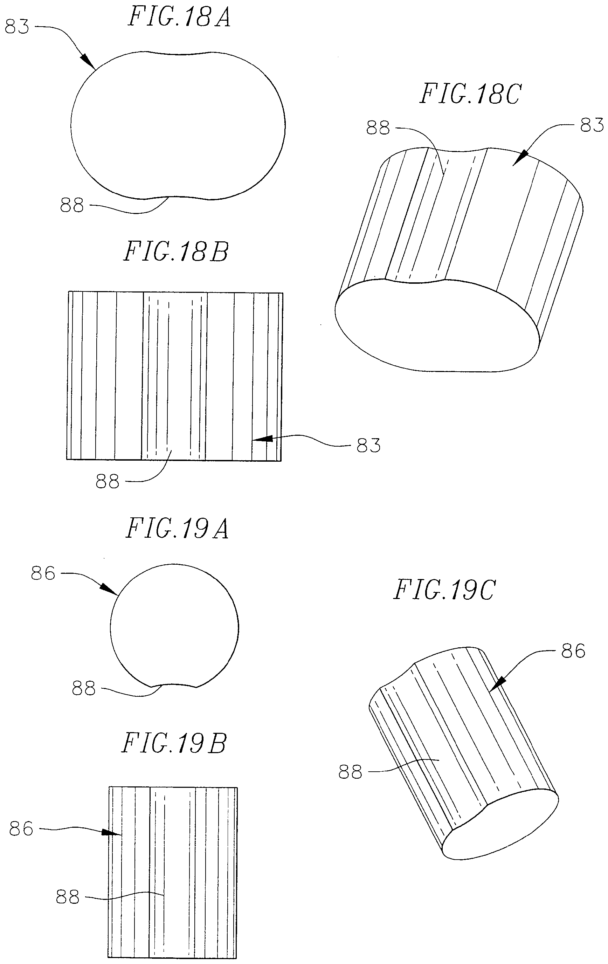

Figs. 15 and 16 show a cartridge mounting arrangement useful in boring and milling tools in which field adjustability via adjustment shims is eliminated and is replaced with factory-grinding of shims for the purpose of fine positioning of the multiple cutters of the tool for the purposes noted earlier. As shown best in Fig. 16, in this arrangement, one mounting shim is mated directly against the pocket radial wall 77 (the pocket wall which faces radially away from the center of the tool body) and, instead of against the pocket axial wall 76, against an axially facing surface 81 of a mounting plug 82 supported in the pocket axial wall 76. This arrangement enables factory adjustment of cartridge position by grinding each set of shims as needed. The elimination of field adjustability permits the elimination of a shim adjustment hole 79, shim adjustment screw 80, and shim retainer 10. Fig. 16 is a close-up perspective view of a milling tool pocket 75 with two oblong mounting shims 83, shown in more detail in Figs. 18a-c. Mounting plug 82 can be held in place by a weld while the other end of the mounting plate 74 and its bottom surface can be affixed with welds and/or adhesives. The shims preferably are held in place with a shim locking screw 84. Fig. 16 also shows an optional insert clearance cavity 85 in the pocket radial wall. Fig. 17 shows a similar cartridge mounting arrangement for a turning tool where the shim slots 7 have been removed from the mounting arrangements illustrated in Figs. 1 and 2, and the primarily-flat mounting shims 6 have been replaced with round mounting shims 86 that are pressed into shim receiving holes 87.

Figs. 18a-c show an oblong mounting shim 83 and Figs. 19a-c show a round mounting shim 86. In each of shims 83 and 86 the stator contact surface 88 which engages the base 3 of cartridge stator 55 can be either flat/planar, or it may be concave as shown in Figs. 18a and 19a, the radius of concavity preferably being at least slightly greater than the radius of the stator base 3.

Fig. 20 is a transverse cross-sectional elevation view of another insert 100 of this invention. Insert 100 has the features and characteristics of insert 17 as described above except for the particular configuration and contour of its rake face 30 and its riser 33. In insert 100, the riser surface above rake face 30 slopes upwardly at an angle 101 which is closer to 0° than angle 33a of insert 17. Angle 101 can be negative as shown. Also, Fig. 20 shows that, if desired, rake face 30 can have an optional, preferably ground-in positive angle 102 at cutting edge 29.

Fig. 21 is a top perspective view of another insert 105 of this invention which, like insert 100, is configured to provide impedance to the radial transfer of heat in the insert to its supporting structure such as cartridge 1. Insert 105 has recesses 106 formed in its rake face closely adjacent to the insert's cutting edge 29. The recesses are regularly spaced apart around the circumference of the insert. The spacing between the ends of adjacent recesses preferably is less than the length of a recess in a direction around the insert. The recesses can extend into the riser face, if desired. The insert can have ridges 107 which are raised above the nominal rake face and which extend radially of the insert on the rake face (between adjacent recesses 106 if recesses are present) and upwardly along the insert riser as far above the rake face as may be desired. The recesses, ridges, or both recesses and ridges provide added traction between the flowing chips and the insert, enhancing the torque provided to rotate the insert in its mounting cartridge. Though not shown in cuttings Fig. 21, recesses and/or ridges may be present only on the riser without their counterparts on the rake face.

Fig. 22 shows a two-sided insert 110 which may be used specifically for cutting at a negative rake angle. Insert 110 can be thicker in an axial direction than the other inserts described herein because there is no need to lower the cutting edge 29 below the top of the insert as is needed in space-limited positive rake applications. Insert 110 preferably has an insert bottom recess 39 on both its top and bottom, as insert 110 can be flipped over and used equivalently upside down. Insert 110 has thermal impedance features as shown and as described above.

The combination of a hard relatively highly thermally conductive insert 17 axially scalloped (fluted) at its inner diameter with a relatively poorly thermally conductive annular heat shield 40 having its outer surface engaged with the peaks between the insert scallops significantly reduces the amount of heat which can be conducted from the outer portion of the insert to sleeve 45 of cartridge rotor 18. That reduction in heat flow to the rotor along the path from the outer portion of the insert to the rotor is achieved for two reasons. First, the path includes the poorly conductive heat shield; the heat shield's poor thermal conductivity provides a thermal impedance effect which reduces that heat flow. Second, the reduction in the area of physical contact between the insert and the heat shield, caused by the scalloping (fluting) of the inner diameter of the insert, produces a further thermal impedance effect. Those two heat conductance reductions in the flow of heat along that path are obtained because the ability of heat energy to move conductively along a path is dependent on the thermal conductivity of the materials defining the path, the lengths of the materials in the path, and the cross-sectional area of the path. The scallops 38 in the inner diameter of insert 17 reduce the cross-sectional area of the relevant conductive heat energy flow path.

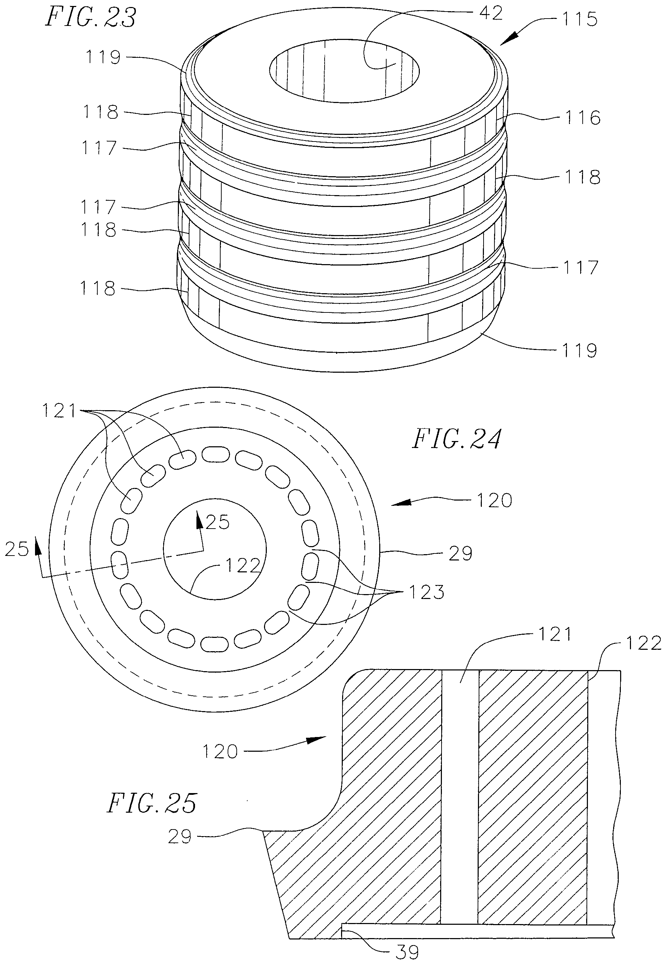

The thermal impedance of the heat flow path from the insert 17 to rotor 18 can be increased further by providing circumferential scallops in the outer diameter of an insert heat shield as shown in Fig. 23. Fig. 23 is a perspective view of an annular insert heat shield 115 in which the outer surface 116 is effectively scalloped (fluted) by a plurality of shallow circumferential grooves 117 formed in that surface to create between them and the ends of the heat shield a plurality of lands (ridges) 118 which, in turn define the outer diameter of the shield. The outer end surfaces of the insert preferably are chamfered, as at 119, to enable the shield to be pressed, e.g., into the inner diameter of its insert such as insert 17 as shown in Fig. 8. When heat shield 115 is placed in the inner diameter of insert 17, physical contact between the insert and the heat shield occurs only at those spaced places in the interface between them where insert scallop peaks 37 engage heat shield lands 118; those places are spaced axially and circumferentially over the interior of the insert and the exterior of the heat shield.

By way of example, assume that insert 17 is defined by tungsten carbide which has a relative coefficient of thermal conductivity of 80 (a reasonable value taken from the range of 70-100 for that material), heat shield 115 is defined by stainless steel having a relative coefficient of thermal conductivity of 15, and for a matter of simplicity, that the air contained in any contact discontinuities is zero (i.e., being negligibly small relative to those of the solids). Assume also that the radial distance from the heat source at the cutting edge 29 to the rotor outer diameter 18a is 6 mm, 2 mm of which is consumed by the thickness of the heat shield 115 when one is present, and that the area of scallop peaks 37 of the insert is 25% of the area of the inner surface area of an unscalloped insert of equal thickness and inner diameter, and that the area of heat shield 115 defining lands 118 is 50 percent of the outer diameter of an equivalent ungrooved heat shield 40, and that the scallops are 0.5 mm in height from their tops 36 to their valleys 38 while the depths of the grooves 115 are 0.5 mm. Applying those assumptions and treating the conduction in a Cartesian sense as an approximation to the cylindrical nature of the actual geometry, as compared to an unfeatured inner surface of the insert and an unfeatured outer surface of the heat shield which are of equal axial extent, the presence of the heat shield in the insert reduces the conductance of the heat energy flow path from the insert to the cartridge rotor to [(4/80 + 2/15)⁻¹/(80/6)] x 100 = 41% of the conductivity of such unfeatured flow path. That means that flow of heat into the cartridge will be 59% less preferable, relative to without the heat shield, and thus a greater percentage of the total heat energy from the source will flow along other paths, rather than to the cartridge, to be removed from the insert. Simplifying for the purpose of general illustration the three-dimensionality of the thermal conductance in the locale of the scallops and grooves, if the scalloped insert were to be engaged with an ungrooved heat shield, the conductance of the heat energy flow path from the insert cutting edge 29 to the cartridge rotor surface 18a becomes [(3.5/80 + 0.5/(80x0.25) + 2/15)⁻¹/(80/6)] x 100 = 37%, relative to an unfeatured insert and an unfeatured heat shield. Furthermore, when the scalloped insert is mated to circumferentially grooved heat shield 115, the reduction in the conductance of heat energy flow path of interest becomes [(3.5/80 + 0.5/(80x0.25x0.5) + 0.5/(15x0.25x0.5) + 1.5/15)⁻¹/(80/6)] x 100 = 16%, relative to the case of an unfeatured insert and an unfeatured heat shield.

The thermal impedance enhancing techniques and arrangements described above, including those illustrated in Figs. 8 and 23, can be practiced or used in the interface between an insert, with or without a heat shield carried by the insert, and cartridge rotor sleeve 45, if desired. In such a case, the exterior of rotor 45, in the portion of its extent above skirt top 20 which is radially adjacent the insert, can be circumferentially grooved in the manner shown in Fig. 23.

As noted above, one technique for increasing thermal impedance in the heat energy flow path to cartridge rotor 18 is to reduce the cross-sectional area of the path. Figs. 24 and 25 illustrate an application of that technique within the hard, highly thermally conductive material of a self-propelled rotary metal-cutting insert. Fig. 24 is a top plan view of an insert 120 which can have an overall height and configuration consistent with the foregoing description. Fig. 25 is a fragmentary cross-sectional elevation view of insert 120 taken along line 25-25 in Fig. 24. In insert 120, a plurality of passages 121 are defined through the insert material. Passages 121 preferably are defined to open to a bottom recess 39 in the insert, to be parallel to the central axis of the insert, and to be regularly spaced along a circle having a radius from the insert axis which has a length intermediate the lengths of the radius to the insert cutting edge 29 and of the radius of the insert's inner annular surface 122. The cross-sectional shape of each passage can be oval as shown in Fig. 24. The portions 123 of the insert which are on the passage circle are narrow and thus form restrictions in the area of a heat energy flow path from adjacent cutting edge 29 to the insert's inner surface 122 and so increase the thermal impedance of that path.

It was noted above that the selection of materials with differing coefficients of thermal conductivity to define an insert and relevant portions of an insert mounting cartridge can provide desired thermal impedance increases in heat energy flow paths to the cartridge bearings, thereby making other flow paths more significant to dissipation of heat present in the insert. Approximate relative values of thermal conductivity k of some useful materials are as follows:

| | |
|---|---|
| Macor machinable glass ceramic | 1.5 |
| Ti-6Al-4V alloy | 7 |
| 304 Stainless Steel | 15 |
| Silicon nitride | 25 |
| Carbon steel | 50 |
| Tungsten carbide | 70-100 |

Preferably, the insert material has a relative k of 25 or more and the material of a heat shield for the insert has a relative k of 15 or less.

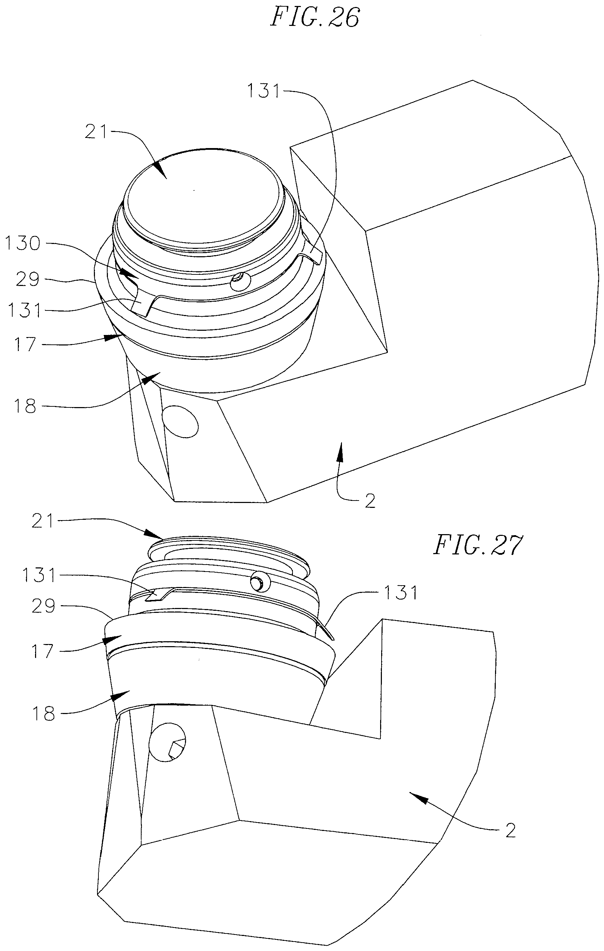

For materials that form inherently continuous chips, in particular those that resist chip breaking, such as but not limited to titanium, nickel alloys and steels, chip breaker tabs can be included in a cartridge of this invention. Under lighter machining conditions, in particular in terms of depth of cut, where the chip curls tightly such that it completes its chip curl before contacting the workpiece surfaces, the chip forms a helix that flows ahead of the tool primarily in the feed direction. However, under heavier machining conditions, in particular in terms of depth of cut, the chip curl radius is larger resulting in the chip contacting the workpiece surface prior to completing its curl, at which time it backward bends and breaks, facilitated by the tensile stress on the rough side of the chip acting on the stress concentrations associated with said roughness. However, in many instances the chip breaking is incomplete and a long segmented chip results, which can flow back toward the cutting zone where it may be re-cut and/or accumulate on tooling surfaces. Tabs that rotate past the cutting zone with insert rotation serve to sideways bend the chip, resulting in complete breaking of the chip as a result of the bending moment acting at the various stress concentrations and near-complete breakage points between the chip segments, and subsequent projection of the broken chips ahead of the tool. Figs. 26 and 27 show how chip breaking can be achieved with chip breakers which rotate with an insert. Chip breaker 130 can be a thin metal disc of about the same diameter as the cartridge hold-down cap 21 which can be clamped between the hold-down cap bottom 26 and insert top 27 so that the insert, the hold-down cap and the chip breaker all rotate together about the cartridge axis. Tabs 131 can extend a desired distance outwardly and downwardly from spaced locations along the edge of that disc to engage and break cutting chips at locations closely adjacent to the insert cutting edge 29.

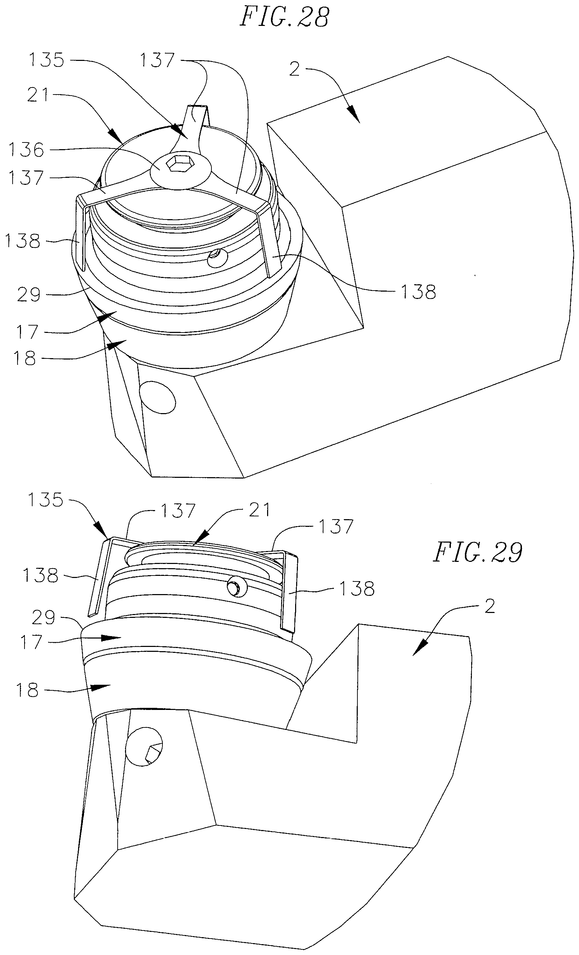

Figs. 28 and 29 show another chip breaker 135 which can be attached to the top of the hold-down cap 21 to rotate with the cap. Chip breaker 135 can be made from thin steel sheet and can have a central hub which can be clamped to the top of hold-down cap 21 by a screw 136 extending through the hub into a tapped hole in the top center of the cap. A plurality of fingers 137 can extend radially from the hub to beyond the radius of cap 21 where they can be bent downward to form chip breaking tabs 138. Alternately, the chip breaking tabs could be integrated directly into the hold-down cap 21 (not illustrated). The tabs 131 and 138 preferably extend outward radially to a diameter slightly less than the diameter of the cutting edge 29. Tabs 131 and 138 may lie in a single axial plane, or they extend down into a chip formation space 140 at an angle as in Figs. 26 and 28, though not to the extent that chips cannot form between the insert rake face and the tab ends, or near to or exactly vertical following the surface of insert riser 33 to serve, in addition to chip breaking, a similar purpose as do riser ridges.

Rotating chip breakers, such as chip breakers 130 and 135, cannot be provided as components of prior art rotary insert and cartridge sets of the kind shown in U.S. Patent 4, 477,211. The reason is that the top end structures of such cartridges are stationary so that such structures can be engaged by clamp elements mounted to the tool body which provide structural fixed support to the top ends of such cartridges.

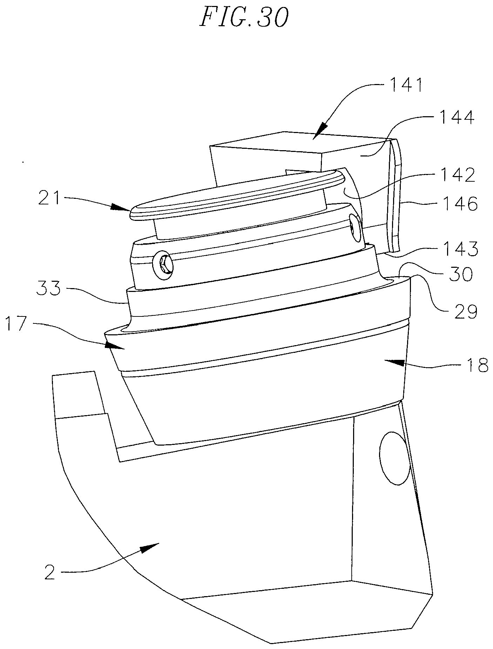

As a further way to obtain chip control and breaking, under even heavier conditions, in particular in terms of depth of cut, where chips become so large that they may not consistently evacuate the space between a chip breaker tab 131 or 138 and the insert riser 33, a chip deflector may be used as illustrated in Fig. 30. The deflector guides the chip with additional sideways motion ahead of the tool in the feed direction, causing side bending and preferential flow away from the cutting zone. A deflector body 141 can be attached to the tool body 2 or to the machine tool mounting system in a manner per the application. The deflector has a pocket 142 that mates closely but not necessarily in radial contact with the hold-down cap 21 and insert riser 33, while also having a ledge 143 that covers part of the insert top 27 near its outer diameter. When the chip flows axially upward from the rake face 30 curling against and then away from the riser 33, it encounters the deflector chute surface 144, which preferably slopes upwardly and forwardly relative to body 41 at an angle that is preferably between 0 and 90 degrees, extending from a point slightly above the rake face 30 and upward toward the hold-down cap 21. The deflector chute surface 144 may or may not have a forwardly extending deflector chute lip 146, the purpose of which is to better assure the chip does not slip between the deflector body 141 and the workpiece, but rather remains flowing along the deflector chute surface 144.

In the light of the foregoing descriptions of certain presently preferred embodiments of the invention, it will be appreciated that one aspect of the invention focuses upon control of heat generated in a self-propelled rotary metal-cutting insert, rotatably carried in a cartridge secured to a tool body, as the insert operates to cut a workpiece. Control of heat flow in the insert is achieved in several ways, including: a) defining the insert, by its geometry or its materials (composite inserts such as shown in Fig. 7), or by a combination of geometry and materials, so that it can transfer a significant portion of its heat energy to ambient fluids such as air or machining lubricants or coolants in the vicinity of the operating insert and the cartridge hold-down cap, thereby reducing the portion of the insert's heat energy available for conductive transfer to the structure of the cartridge; and b) defining the cartridge, both geometrically and compositionally, so that flow paths in the cartridge for heat energy transferred to the cartridge from the insert are defined to preferentially route such transferred heat energy to the environment of the cartridge (e.g., to surrounding air) and/or to the tool body rather than to and through the radial-load and thrust-load bearings within the cartridge. While the heat control aspects of this invention can be used to advantage in inserts and cartridge of any desired and effective size, those aspects have particular significance and utility where small cartridge size is important.

The foregoing descriptions and the accompanying drawing views are not an exhaustive catalog of the structures and procedures which can be used to practice the several described aspects of this invention. Those descriptions and views have been selected, presented, and addressed to a person ordinarily skilled in the relevant art and technology, in support of descriptions and explanations of the principles of the invention and presently preferred and other structures and procedures which can enable such a person to understand and practice in the invention. Such a person will appreciate that, especially in light of those descriptions and views, other structures and procedures can be used to advantage within the fair scope of the invention as set forth in the following claims.

## Claims

1. A self-propelled rotary metal-cutting insert (17) comprising:
a body (28) having a central axial hole (35) extending between opposite ends of the body and by which the body can be mounted onto a rotor (18) for rotation with the rotor about an axis of the body during and in response to cutting engagement of the insert with a workpiece, wherein the body (28) has an exterior surface (31) which extends between the body ends and is defined as a surface of revolution concentric to the body axis, the exterior surface defining a circular cutting edge (29) concentric to the body axis, the body (28) having an inner surface defining said axial hole (35), **characterized in that** said inner surface comprising a plurality of circumferentially spaced apart peak surfaces, said peak surfaces (36) defining a plurality of circumferentially spaced apart valleys (38), each of said plurality of peak surfaces (36) comprising at least a surface portion for contacting an outer surface of said rotor (18) and maintaining a radial separation from said rotor to said valleys (38), and wherein the body (28) is defined to impede the transfer of heat generated at the cutting edge (29) across the surface of the central hole (35) of the body.

2. An insert according to claim 1 in which substantial portions of the exterior surface of the body exist on opposite sides of the cutting edge.

3. An insert according to any one of claims 1 or 2 **characterized in that** one end of the body is a base end (19) at which the body defines a flat base surface perpendicular to the body axis, and the base surface defines a recess (39) concentric to the body axis, the recess having an outer limit proximate to but inwardly from the body exterior surface, the recess extending from its outer limit to the central hole of the body.

4. An insert according to claim 3 in which the exterior surface of the body extends inwardly from the cutting edge and then upwardly to a top end of the insert.

5. The combination of a self-propelled annular rotary metal cutting insert (17) according to claim 1 with a cartridge (1) which is mountable to a tool body (2) and which supports the cutting insert for rotation concentrically about a cartridge axis, wherein the cutting insert rotates in response to engagement of its cutting edge (29) with a workpiece moving relative to the insert in use of the insert and the insert becomes hot as a result of such engagement with a workpiece, and wherein the cartridge includes an axial stator (56) adapted to be fixedly secured to a tool body, the cartridge also including a rotor (18) rotatable about the stator and which concentrically receives the annular cutting insert and supports a bottom surface of the cutting insert on a support platform (20) of the rotor, said rotor penetrating said central axial hole (35), and wherein the cartridge further including a hold-down cap (21) releasably engaged with an upper end of the rotor to clamp the cutting insert between the cap and the support platform so that the cap, the cutting insert and the rotor are rotatable together about the stator, the cartridge further including axial-load and radial-load roller bearings (51, 62) disposed respectively in an annulus between the rotor and the stator and between the rotor support platform and the stator, and wherein the cutting insert and the cartridge are cooperatively configured and defined to impede the transfer of heat energy generated at the insert cutting edge to the bearings within the rotor.

6. An insert according to claim 1, wherein each surface portion of each said plurality of peak surfaces (36) defines a section of a circle along said circumferential direction, said circle being concentric with the circular edge (29).

7. An insert according to claim 1, wherein the rotor comprises a rotor sleeve (45), wherein said body is rotationally fixed relative said rotor sleeve of said rotor.

8. An insert according to claim 1, wherein one of said opposite ends comprises an annular recess (39) coaxial with the hole and extending to said inner surface.

9. An insert according to claim 1, further comprising a riser (33) extending from the body in a direction toward a cap (21).

## Patentansprüche

1. Selbstangetriebener rotierender Metailschneideinsatz (17), umfassend:
einen Körper (28) mit einem zentralen axialen Loch (35), das sich zwischen gegenüberliegenden Enden des Körpers erstreckt und durch das der Körper an einem Rotor (18) zur Drehung mit dem Rotor um eine Achse des Körpers während und in Reaktion auf einen Schneideeingriff des Einsatzes mit einem Werkstück montiert werden kann, wobei der Körper (28) eine Außenfläche (31) aufweist, die sich zwischen den Körperenden erstreckt und als eine zur Körperachse konzentrische Rotationsfläche definiert ist, wobei die Außenfläche eine kreisförmige Schneidkante (29) definiert, die konzentrisch zur Körperachse ist, wobei der Körper (28) eine Innenfläche aufweist, die das axiale Loch (35) definiert, **dadurch gekennzeichnet, dass** die Innenfläche eine Vielzahl von außenumfänglich beabstandeten Gipfelflächen umfasst, wobei die Gipfelflächen (36) eine Vielzahl von außenumfänglich beabstandeten Tälern (38) definieren, wobei jede der Vielzahl von Gipfelflächen (36) wenigstens einen Oberflächenabschnitt umfasst, um eine Außenfläche des Rotors (18) zu kontaktieren und eine radiale Trennung von dem Rotor zu den Tälern (38) aufrechtzuerhalten, und wobei der Körper (28) dazu definiert ist, die Übertragung der an der Schneidkante (29) erzeugten Wärme über die Oberfläche des zentralen Loches (35) des Körpers zu hemmen.

2. Einsatz nach Anspruch 1, bei dem wesentliche Teile der Außenfläche des Körpers auf gegenüberliegenden Seiten der Schneidkante vorhanden sind.

3. Einsatz nach einem der Ansprüche 1 oder 2, **dadurch gekennzeichnet, dass** ein Ende des Körpers ein Basisende (19) ist, an dem der Körper eine ebene Basisfläche senkrecht zur Körperachse definiert, und dass die Basisfläche eine zur Körperachse konzentrische Eintiefung (39) definiert, wobei die Eintiefung eine äußere Begrenzung in der Nähe der Körperaußenseite, jedoch von dieser einwärts versetzt, aufweist, wobei sich die Eintiefung von ihrer äußeren Begrenzung zum zentralen Loch des Körpers erstreckt.

4. Einsatz nach Anspruch 3, bei dem sich die Außenfläche des Körpers von der Schneidkante einwärts und dann aufwärts bis zu einem oberen Ende des Einsatzes erstreckt.

5. Kombination eines selbstangetriebenen, ringförmigen, rotierenden Metallschneideinsatzes (17) nach Anspruch 1 mit einem an einem Werkzeugkörper (2) montierbaren Steckmodul (1), das den Schneideinsatz zur konzentrischen Drehung um eine Steckmodulachse trägt, wobei sich der Schneideinsatz als Reaktion auf den Eingriff seiner Schneidkante (29) mit einem sich relativ zu dem Einsatz bewegenden Werkstück bei Verwendung des Einsatzes dreht und der Einsatz infolge eines solchen Eingriffes mit einem Werkstück heiß wird, und wobei das Steckmodul einen axialen Stator (56) aufweist, der dazu geeignet ist, an einem Werkzeugkörper fest angebracht zu werden, wobei das Steckmodul auch einen Rotor (18) aufweist, der um den Stator drehbar ist und den ringförmigen Schneideinsatz konzentrisch aufnimmt und eine Bodenfläche des Schneideinsatzes auf einer Trägerplattform (20) des Rotors trägt, wobei der Rotor das zentrale axiale Loch (35) durchdringt und wobei das Steckmodul ferner eine Niederhaltekappe (21) aufweist, die lösbar mit einem oberen Ende des Rotors in Eingriff steht, um den Schneideinsatz zwischen der Kappe und der Trägerplattform festzuklemmen, so dass die Kappe, der Schneideinsatz und der Rotor zusammen um den Stator drehbar sind, wobei das Steckmodul ferner Axiallast- und Radiallast-Rollenlager (51, 62) aufweist, die jeweils in einem Ringraum zwischen dem Rotor und dem Stator und zwischen der Rotorträgerplattform und dem Stator angeordnet sind, und wobei der Schneideinsatz und das Steckmodul zusammenwirkend konfiguriert und dazu definiert sind, die Übertragung von Wärmeenergie, die an der Einsatz-Schneidkante erzeugt wird, auf die Lager innerhalb des Rotors zu hemmen.

6. Einsatz nach Anspruch 1, wobei jeder Oberflächenabschnitt jeder der Vielzahl an Gipfelflächen (36) einen Abschnitt eines Kreises entlang der Außenumfangsrichtung definiert, wobei der Kreis konzentrisch zu der kreisförmigen Kante (29) ist.

7. Einsatz nach Anspruch 1, wobei der Rotor eine Rotorhülse (45) aufweist, wobei der Körper relativ zur Rotorhülse des Rotors drehfest ist.

8. Einsatz nach Anspruch 1, wobei eines der gegenüberliegenden Enden eine ringförmige Eintiefung (39) aufweist, die koaxial zu dem Loch ist und sich zu der Innenfläche erstreckt.

9. Einsatz nach Anspruch 1, ferner ein Abstandselement (33) umfassend, das sich vom Körper in Richtung einer Kappe (21) erstreckt.

## Revendications

1. Insert (17) de coupe de métal rotatif à avancement autonome comprenant :
un corps (28) pourvu d'un trou axial central (35) qui s'étend entre les extrémités opposées du corps et au moyen duquel le corps peut être monté sur un rotor (18) de manière à tourner avec le rotor sur un axe du corps pendant, et en réponse à, l'engagement de coupe de l'insert avec une pièce, le corps (28) ayant une surface extérieure (31) qui s'étend entre les extrémités du corps et qui est définie comme une surface de révolution concentrique à l'axe du corps, la surface extérieure définissant un bord de coupe circulaire (29) concentrique à l'axe du corps, le corps (28) ayant une surface intérieure définissant ledit trou axial (35), **caractérisé en ce que** ladite surface intérieure comprend une pluralité de surfaces de crête espacées circonférentiellement, lesdites surfaces de crête (36) définissant une pluralité de vallées (38) espacées circonférentiellement, chacune desdites plusieurs surfaces de crête (36) comprenant au moins une partie de surface destinée à venir en contact avec une surface extérieure dudit rotor (18) et à maintenir une séparation radiale entre ledit rotor et lesdites vallées (38), et le corps (28) étant défini de manière à empêcher le transfert de chaleur produite au niveau du bord de coupe (29) sur la surface du trou central (35) du corps.

2. Insert selon la revendication 1, dans lequel des parties importantes de la surface extérieure du corps existent sur des côtés opposés du bord de coupe.

3. Insert selon l'une quelconque des revendications 1 ou 2, **caractérisé en ce qu'**une extrémité du corps est une extrémité de base (19) sur laquelle le corps définit une surface de base plane perpendiculaire à l'axe du corps, et la surface de base définit un évidement (39) concentrique à l'axe du corps, l'évidement ayant une limite extérieure proche de la surface extérieure du corps, mais vers l'intérieur de celle-ci, l'évidement s'étendant depuis sa limite extérieure jusqu'au trou central du corps.

4. Insert selon la revendication 3, dans lequel la surface extérieure du corps s'étend vers l'intérieur depuis le bord de coupe puis vers le haut jusqu'à une extrémité supérieure de l'insert.

5. Combinaison d'un insert de coupe rotatif annulaire à avancement autonome (17) selon la revendication 1 avec une cartouche (1) qui peut être montée sur un corps d'outil (2) et qui supporte l'insert de coupe pour une rotation concentrique sur un axe de cartouche, l'insert de coupe tournant en réponse à l'engagement de son bord de coupe (29) avec une pièce se déplaçant par rapport à l'insert lors de l'utilisation de l'insert et l'insert s'échauffant à la suite d'un tel engagement avec une pièce, et la cartouche comprenant un stator axial (56) adapté pour être attaché de manière fixe à un corps d'outil, la cartouche comprenant également un rotor (18) pouvant tourner autour du stator et recevant concentriquement l'insert de coupe annulaire et supportant une surface inférieure de l'insert de coupe sur une plate-forme de support (20) du rotor, ledit rotor pénétrant dans ledit trou axial central (35) et la cartouche comprenant en outre un capuchon de retenue (21) engagé de manière libérable avec une extrémité supérieure du rotor pour serrer l'insert de coupe entre le capuchon et la plate-forme de support de sorte que le capuchon, l'insert de coupe et le rotor puissent tourner conjointement autour du stator, la cartouche comprenant en outre des paliers à rouleaux à charge axiale et à charge radiale (51, 62) disposés respectivement dans un espacé annulaire ménagé entre le rotor et le stator et entre la plate-forme de support de rotor et le stator, et les inserts de coupe et la cartouche étant conçus et définis de manière coopérative pour empêcher le transfert d'énergie thermique, produite au niveau du bord de coupe de l'insert, vers les paliers situés à l'intérieur du rotor.

6. Insert selon la revendication 1, dans lequel chaque partie de surface de chacune de ladite pluralité de surfaces de crête (36) définit une section d'un cercle le long de ladite direction circonférentielle, ledit cercle étant concentrique au bord circulaire (29).

7. Insert selon la revendication 1, dans lequel le rotor comprend un manchon de rotor (45), ledit corps étant fixe en rotation par rapport audit manchon dudit rotor.

8. Insert selon la revendication 1, dans lequel l'une desdites extrémités opposées comprend un évidement annulaire (39) coaxial au trou et s'étendant jusqu'à ladite surface intérieure.

9. Insert selon la revendication 1, comprenant en outre un flanc (33) s'étendant depuis le corps en direction d'un capuchon (21).
